(19)

Europäisches Patentamt
European Patent Office
Office européen des brevets

(11) **EP 1 830 488 A1**

(12) **EUROPEAN PATENT APPLICATION**

(43) Date of publication:
05.09.2007 Bulletin 2007/36

(51) Int Cl.:
*H04B 7/15* (2006.01)    *H01Q 3/46* (2006.01)

(21) Application number: 07110884.9

(22) Date of filing: 05.06.2000

(84) Designated Contracting States:
AT BE CH CY DE DK ES FI FR GB GR IE IT LI LU
MC NL PT SE

(62) Document number(s) of the earlier application(s) in
accordance with Art. 76 EPC:
00112092.2 / 1 162 764

(71) Applicant: **Sony Deutschland GmbH**
**10785 Berlin (DE)**

(72) Inventors:
• **Oberschmidt, Gerald**
**70327 Stuttgart (DE)**
• **Brankovic, Veselin**
**70327 Stuttgart (DE)**

• **Krupezevic, Dragan**
**70327 Stuttgart (DE)**
• **Konschak, Tino**
**70327 Stuttgart (DE)**
• **Dölle, Thomas**
**70327 Stuttgart (DE)**

(74) Representative: **Körber, Martin Hans et al**
**Mitscherlich & Partner**
**Sonnenstrasse 33**
**80331 München (DE)**

Remarks:
This application was filed on 22 - 06 - 2007 as a
divisional application to the application mentioned
under INID code 62.

(54) **Indoor wireless communication system using active reflector**

(57) The present invention relates to an active reflector (10) for use in indoor wireless data communication systems comprising receiving means (11) for receiving signals from a first mobile terminal (13) and transmitting means (12) for transmitting the received signals to a second mobile terminal (14) in an omni-directional way, so that a direct communication with high data rates between mobile terminals in an indoor environment is enabled, whereby the active reflector is adapted to be mounted above the mobile terminals in the indoor environment to ensure essentially a line of sight connection between the active reflector and each mobile terminal. No cost-intensive baseband processing and/or broadband cabling infrastructure is necessary, so that a simple and cost-effective indoor communication is enabled.

Fig. 1

Printed by Jouve, 75001 PARIS (FR)

## Description

The present invention relates to a high data rate wireless transmission system for indoor applications operating in the upper microwave, mm-wave range, and/or in the infrared region.

With the increasing number of digitally controllable electric and electronic devices, and the possibility to turn a big variety of portable or handhold electronic equipment, like e.g. Palmtops or recently developed cellular phones, into a personal control centre, a growing need for low cost high data rate wireless data communication systems for interconnecting mobile electronic equipment of different purposes such as PC, printer, TV set, VCR, digital cameras or other non-stationary devices evolved.

High data rate wireless transmission systems for indoor applications require large bandwidths available in the infrared region, the higher microwave, and the mm-wave range, like e.g. in regions from 15GHz throughout 60 GHz and higher frequencies. Line of sight connection between transmitter and receiver is generally required for higher frequencies, but is often difficult to establish when people move around, thus passing through the connection path or when future changes in the environment and/or the arrangement of the terminal stations have to be taken into account or when the terminals themselves are mobile. In home or office environments a low cost approach for interconnecting electronic equipment also implies renunciation of any additional installation effort, as will be involved with setting up a broadband cabling infrastructure for interconnecting base stations with a main processing unit. To avoid high signal attenuation at the rim of the receiving zone jeopardising the system performance, the radiation characteristic of the linking device has to compensate for the physical attenuation of the signal increasing with the distance between transmitter and receiver.

The problem to ensure line of sight for high frequency signal propagation is solved in the state of the art by either placing the RF-repeater high, in indoor environments at the ceiling, above the mobile units, or to establish a chain of RF-repeaters to guide the signal around obstacles. Another approach, as in US 5,603,080, is a conversion of the signal to lower frequencies, which require no line of sight for propagation, and then reconvert the signal to the original frequency, before it is submitted to the mobile unit.

Known wireless data transmission systems as disclosed in US 5,812,933 and in US 5,890,055 provide a radio link between the mobile terminal stations and a basestation, which acts as a gateway for communication between the fixed and the wireless network. The main drawback of those systems is that they require cost effective baseband processing units which depend on a broadband cabling infrastructure for being interconnected between themselves and with a main processing unit. The same is true for the indoor wireless communication system disclosed in EP 0833 403 A2, where an active repeater establishes an indirect line of sight between cordless phones and their respective basestations for extending their range within a building.

The object of the present invention is therefore to provide an active reflector for use in an indoor wireless high data rate communication system, on such a communication system interconnect mobile and other terminal equipment in a simple and cost-effective way, which overcomes the disadvantages of the prior art.

This object is achieved by an active reflector for use in indoor wireless data communication systems according to claim 1 comprising receiving means for receiving signals from a first mobile terminal and transmitting means for transmitting the received signals to a second mobile terminal in an omnidirectional way, so that a direct communication with high data rates between mobile terminals in an indoor environment is enabled, whereby the active reflector is adapted to be mounted above the mobile terminals in the indoor environment to ensure essentially a line of sight connection between the active reflector and each mobile terminal. The above object is further achieved by a wireless data communication system for direct communication between mobile terminals in an indoor environment according to claim 15, characterised by at least one active reflector (according to one of the claims 1 to 14) and at least two mobile terminals with transceivers for direct wireless communication through the active reflector.

The active reflector of the present invention works basically like a mirror for high frequency signals, providing indirect line of sight for direct data transmission between the terminals within the cell. Therefore no cost-intensive baseband processing unit and/or broadband cabling infrastructure is necessary, so that a simple and cost-effective indoor communication is enabled.

Advantageous features of the present invention are defined in subclaims.

Signals received from the mobile terminals are advantageously processed before being transmitted back. Basically signal processing consists of amplification in a gain block to reduce the chance of a broken communication link, whereby the gain block may be built-up from several sub-gain blocks, any of which may be switched off to provide a means for simple automatic gain control. An optional filtering unit will restore the original signal.

Active reflectors may also work in the manner to scale the frequency. In that case the system is set as a Frequency Division Duplex (FDD) system, where either separate antennae are used for the transmit and receive function of the active reflector, or one common antenna is used for both functions.

To avoid weak signals for mobile terminals located at the far ends of the range of the active reflector, and/or that signal power is wasted for directions where no terminals exist, and/or that the signals disturb other active reflectors, the antennae of the active reflector are preferably sectored antennae with uniform power coverage pattern. Specific polarisation combinations reduce multipath effects.

The signal processing unit of the active reflector may additionally comprise a frequency translating unit, so that the frequency or channel of the received signal is changed before it is transmitted. This enables a better distinction between input and output and thus avoids closed feedback loops in the circuit of the active reflector.

Further on, active reflectors may be equipped with an additional means for wireless communication between each other, in order to transfer data from the sector of a first active reflector to the sector of second active reflector. Preferably a pencil beam type link is used to reduce interference.

For easy set-up and availability of electrical power, the active reflector is preferably located at the positions of the lights and directly connected to their power outlets. As a main advantage of higher frequencies not only the available bandwidth increases, as a second advantage the geometrical size for the antennae decreases due to the smaller wavelength, thus allowing to realise a device with acceptable dimensions that can be integrated in an indoor artificial lighting system.

In the following description, the present invention is explained by means of advantageous embodiments in view of respective drawings, of which

Figure 1 shows the scenario of the proposed high data rate indoor communication system,
Figure 2 is a block diagram of the active reflectors functional blocks,

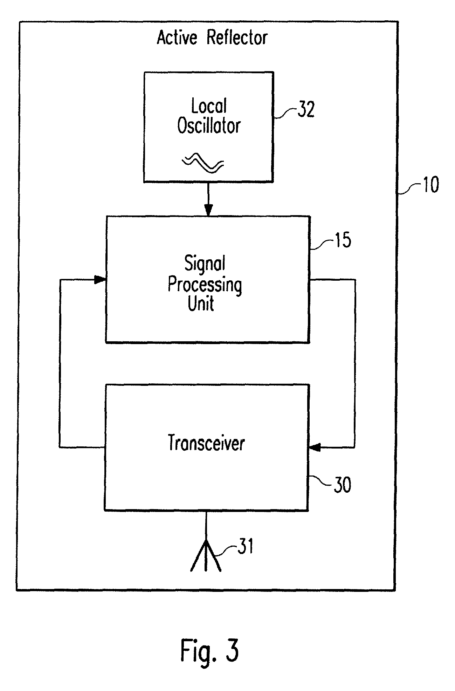

Figure 3 shows the functional blocks of an active reflector with one common antenna working in FDD mode,
Figure 4 presents the ideal radiation pattern of the Rx/Tx antennae of the active reflector providing a uniform cell coverage pattern,
Figure 5 depicts the geometrical set-up for an example,
Figure 6 shows a block diagram of the functional units of an active reflector with extended functionality, and
Figure 7 shows the active reflector of the present invention integrated into a usual object used for providing artificial light in indoor environments.

In the drawings like elements are assigned like reference numerals.

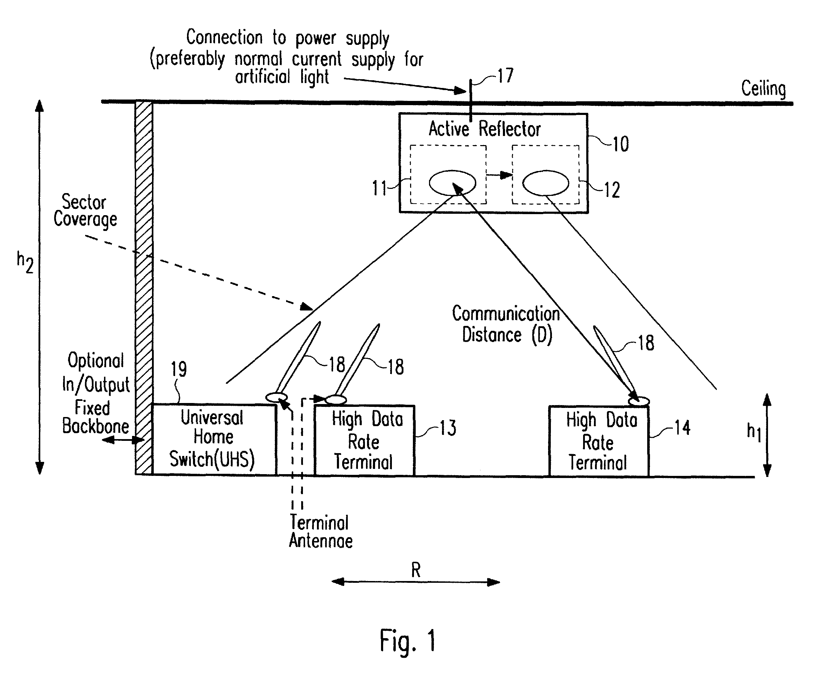

An example of the proposed high data rate indoor communication system deploying an active reflector (10) in accordance with the present invention is schematically shown in Figure 1. The active reflector contains a receiving section (11) for receiving signals from a first mobile terminal (13), and a transmitting section (12) for transmitting the received signals to a second mobile terminal (14) in an omni-directional way. No baseband processing is necessary for this system. This configuration grants every mobile terminal direct access to every other mobile terminal within the reach of the active reflector (10). The active reflector establishes a communication link even, when there is no direct line of sight connection between the two mobile terminals, which is necessary for a radio link at the very high frequencies necessary for data communication at high transmission rates.

The active reflector (10) does in no way influence the logical set-up of the data communication system, it merely forwards signals from one data terminal to another data terminal which cannot communicate directly due to possible obstacles within the communication path. The active reflector (10) is placed at a position in the room that guarantees a line of sight connection to every mobile high data rate terminal of the system. Preferably the active reflector (10) is mounted above the mobile terminals (13, 14), most preferably at the ceiling of an office or a room in a home environment.

Because the active reflector (10) works as a wireless mediator between the connected mobile terminals (13, 14) it is completely autonomous with the one exception of having to be connected to an external power supply. Advantageously, a power outlet (17) for the indoor artificial lighting system is used as a power connector for the active reflector (10). Thereby, no additional installation effort is necessary to put the active reflector (10) into action.

In the preferred embodiment all mobile electronic equipment terminals are equipped with a wireless transceiver entity working in the millimetre wave or infrared region. The emitting devices of the transceiver as well as its receiving devices should have a radiation characteristic which only illuminates the upper half plane, namely the ceiling, where preferably higher antenna directivity for the terminal side is assumed. Having as those antennas with higher gain the system may reduce problems of multipath propagation. To give the mobile terminals access to a stationary high speed data processing facility, a base station, a hub or a universal home switch can be used as a terminal (19) within such a communication system, to provide an optional I/O port to a fixed backbone network.

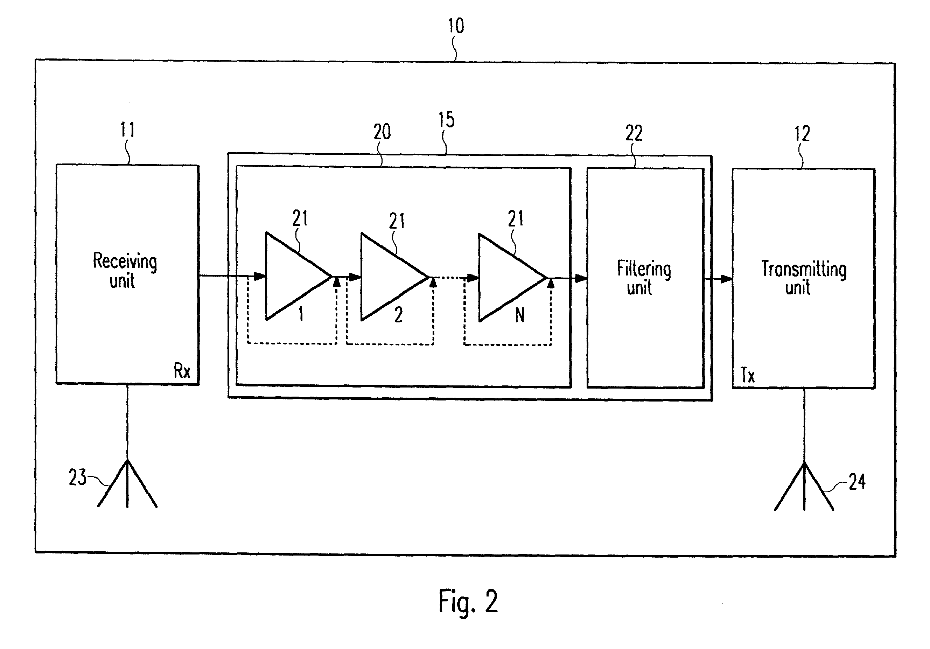

A block diagram of the components of a preferred embodiment of an active reflector is shown in Figure 2. Signals from the mobile terminals are collected by an antenna (23) and processed in the receiving unit (11). Before being passed on to the transmitting unit (12), the signals are being amplified and filtered in the signal processing unit (15). The signal processing unit (15) contains a gain block (20) and a filtering unit (22) wherein the signals are being filtered before handed over to the transmitting unit of the active reflector and finally emitted back to the mobile terminals (13, 14) by the antenna (24). In this example the gain block (20) is an assembly of N sub-gain blocks (21), where either one or a combination of sub-gain blocks can be switched off to accommodate the total gain to the present conditions.

Instead of using separate antennae for the receiving unit and the transmitting unit another preferred embodiment of the invention suggests one common antenna for receiving and emitting the signals. Signals received from the common antenna (31) are being passed on to the transceiver (30) and subsequently processed in the processing unit (15). A local oscillator (32) controls the frequency division duplex and the signals can be transmitted and received via the same common antenna. The processed signals are finally being passed on to the transceiver (30) again and transmitted back to the terminal stations (13, 14) via the common antenna (31).

The effectiveness and performance of the system will be crucially influenced by the radiation field characteristics of the Tx and Rx antennae of the active repeater (10). In the following described special embodiment of the invention the advantages of a uniform power coverage are outlined and, because the reliability of the communication system is not only determined by the sectored radiation pattern but also the polarisation of the Tx and Rx antennae, different combinations of both will be discussed.

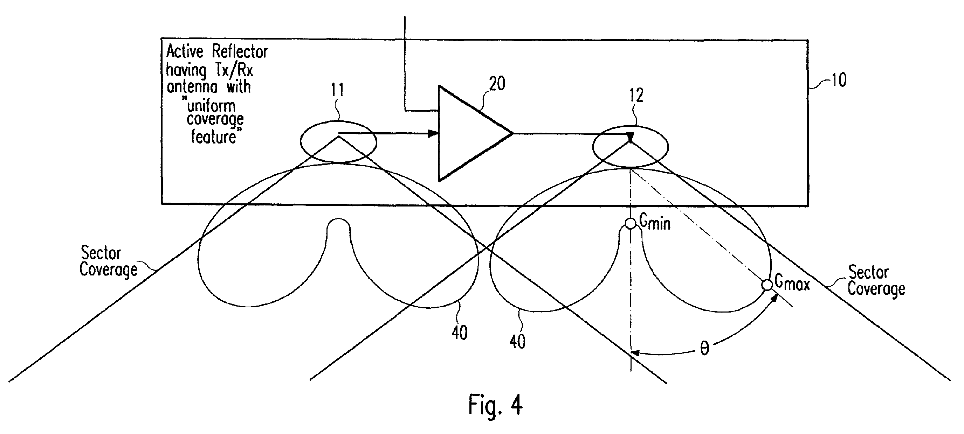

A constant flux illumination of the cell, that is the sector covered by the active repeater, implies that the elevation pattern $G(\theta)$ of the active repeater Tx and Rx antennae ideally compensate the free space attenuation as it is associated with the distance D between repeater and terminal. Figure 4 schematically shows the ideal radiation pattern of the receiving unit Rx antenna and transmitting unit Tx antenna of the reflector to provide a uniform coverage pattern, which means that all mobile terminal equipment positioned at the same height receive approximately the same signal strength. The distance between the two antennae has to be considered as negligible compared to the dimensions of the cell. Therefore, the radiation pattern of one of the antennae can be considered as the common radiation pattern for the active reflector as a whole. Ideally, if a mobile or portable terminal is a high gain antenna pointing directly to the active reflector area, the elevation gain of the ideal radiation pattern should change with equation (1).

$$G(\theta) \;=\; G(\theta_{min})\sec^2\theta \;=\; G(\theta_{min})\frac{(h_2 - h_1)^2 + R^2}{(h_2 - h_1)^2}, \qquad \theta < \theta_{max}$$

$$\tag{1}$$

$$G(\theta) \;=\; 0, \qquad \theta > \theta_{max}$$

The maximum of the radiation pattern occurs at $\theta=\theta_{max}$ and the minimum at $\theta=0$ (see Figure 4). A rough estimate of $G(\theta_{max})$ is represented in Figure 4 wherein the maximum directivity is calculated for an ideal $\sec^2\theta$ pattern as a function of $\theta_{max}$ according to equation (1). Ideally there is no radiation for the case of $\theta$ smaller than $\theta_{max}$, meaning that the repeater will not disturb the operation of a second device placed at some specific distance at the same height. In the following, solutions are given for a 60 GHz system of the proposed indoor wireless system with an active reflector. For the calculations the antenna gain at the mobile terminals is assumed to be 20 dB, which is not to large in order not to require to good pointing. The antenna gain at the active reflector is assumed to be 2 dB for the antenna of the receiver as well as for the transmitter.

In a first example the antennae of the mobile terminals have a linear polarisation characteristic and also the antennae of the active reflector show a linear polarisation characteristic. With this special constellation no specific multipath effect cancellation is won and the amplification of the gain blocks is limited due to coupling between the Rx and Tx branch of the active reflector.

In a second example the antennae of the mobile terminals have a circular polarisation characteristic with one specific rotation. The receiving and the transmitting antennae of the active reflector (if different) are also circular polarised with the same rotation. In this case signals reflected from objects or walls coming to the receiver of the same terminal or at another terminal are additionally attenuated, reducing multipath effects. Secondly, no polarisation pointing of the mobile terminal antennae to the repeater is required causing no additional losses.

In a third example the receiving antennae of the mobile terminals have a linear polarisation characteristic and the transmitting antennae of the mobile terminals have a linear polarisation characteristic orthogonal to that of the receiving antennae. The receiving antenna of the active reflector has the same polarisation as the transmitting antenna of a mobile terminal station, while the transmitting antenna of the active reflector has the same polarisation as the receiving antenna of a mobile terminal. With this example signals originating from one of the terminals and being reflected from objects or walls to any of the terminals are additionally attenuated thus reducing multipath effects.

In a fourth example the antennae of the mobile terminals show a linear polarisation characteristic, while the receiving antenna of the active reflector is operated under polarisation in one rotation direction, and the transmitting antenna of the active reflector shows a polarisation in the opposite rotation direction. With this example no polarisation pointing is required by the expense of the 3dB + 3dB losses, and if there are more active reflectors they are not disturbing each other.

TABLE 1 Basic Realistic System parameters of System Proposed at the Fig. 1

| Feasible Terminal Tx Power level before antenna | 10 dBm |
|---|---|
| Terminal Receiver Noise Figure | 10 dB |
| Repeater Noise Figure | 7 dB |
| Repeater Gain Block | Ensure sufficient power at the input of the active repeater Tx antenna, considering compensation of active device noise figure. Note that theoretically there is no need to have gain control if uniform coverage types of the antennas are used. |
| Channel Bandwidth | 160 MHz |
| Implementation Margin / Non Propagation Losses | 10 dB for single carrier and 13 dB for OFDM carrier |
| Active Repeater Height | 3 m |
| Terminal (electronic equipment antenna) height | 1 m |

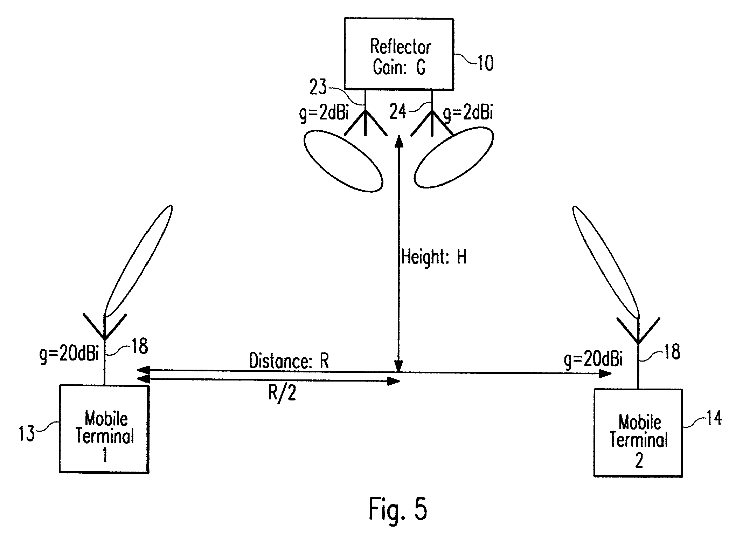

As an example for the calculation of the link budget we will compare a direct interconnection between two mobile terminals to the proposed system consisting of an active reflector in two mobile terminals (see Figure 5). The parameters for the below calculations are given in the above table 1, the unit for all distances used is supposed to be meter.
The power budget for a direct link is

$$L_D = (3 + 3 + C\text{-}20\log(R))\text{dB} \qquad (2)$$

The antennae of the mobile terminal stations used for the above equation are omni-directional with a gain of 3dBi. This is required, since for this operation high gain antennae are very cumbersome or even impossible to use if more than two mobile terminal stations are used.
For the indirect link via the active repeater we obtain

$$L_R = (20 + 20 + 2 + 2 + 2(C\text{-}10\log(R^2/4 + H^2))\text{)dB} \qquad (3)$$

Here, C is a constant dependent on the wavelength:

$$C = 10*\log\left(\frac{\lambda}{4\pi}\right)dB. \qquad (4)$$

For a 60 GHz system C=-57dB. With this value, the complete attenuation for R=10m and H=3m in a 60 GHz system evaluates to

$L_D$ = -71dB
$L_R$ = (-101+G)dB

for perfect line of sight in all cases. With a reflector gain of G=30dB, which is technically possible without any problems, the proposed system with the active reflector allows for a much more secure link without sacrificing any link budget. In a direct link scenario the chance of a broken link is much higher compared to a system set-up with an active reflector.
The system processing unit (15) of the active reflector (10) may also have additionally a frequency translating unit, which changes the received signal frequency to another frequency and transmits the signals at the changed frequency to the mobile terminals. This enables a better distinction between input and output and thus avoids feedback loops in the reflector circuits. Accordingly, the transceivers of the mobile terminals receive and then transmit at the two different frequencies or channels respectively. The active reflector (10) then may also optionally be equipped with a third antenna for direct communication with a second active reflector.

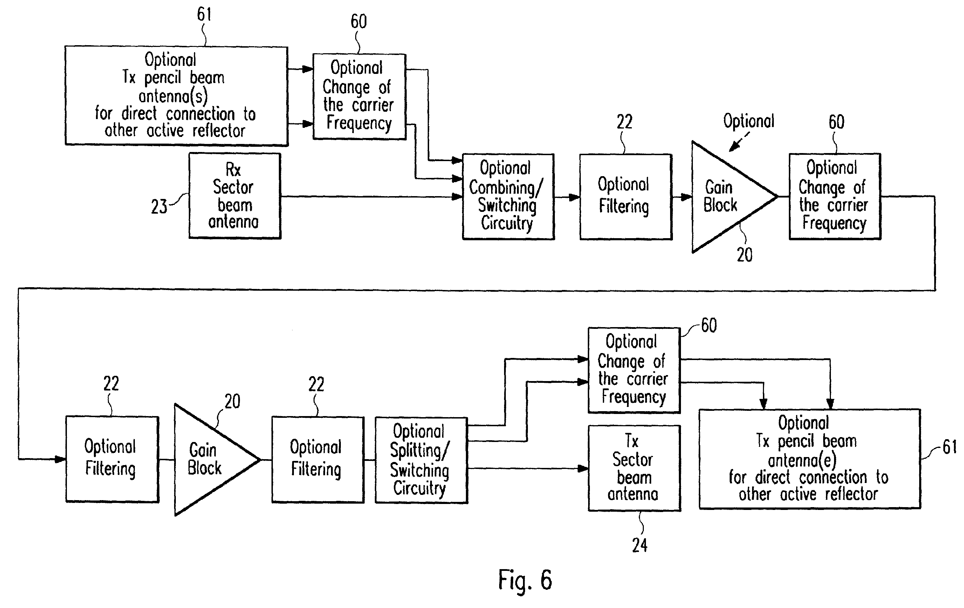

Figure 6 shows the functional blocks of an active reflector with extended functionality where additional pencil beam antennas Tx (61) allow data communication between this first and a second active reflector. Data transmitted from the second active reflector are received by the optional Tx pencil beam antenna and optionally the carrier frequency of the signal is changed (60). Consecutively these signals are being combined with the signals received from the mobile terminals within the reach of this first active reflector, then the combined signal is being processed and distributed to the mobile terminals within the reach of this first active reflector as well as being transmitted back to the second active reflector, where it will also be distributed to the mobile terminals within the reach of the second active reflector.

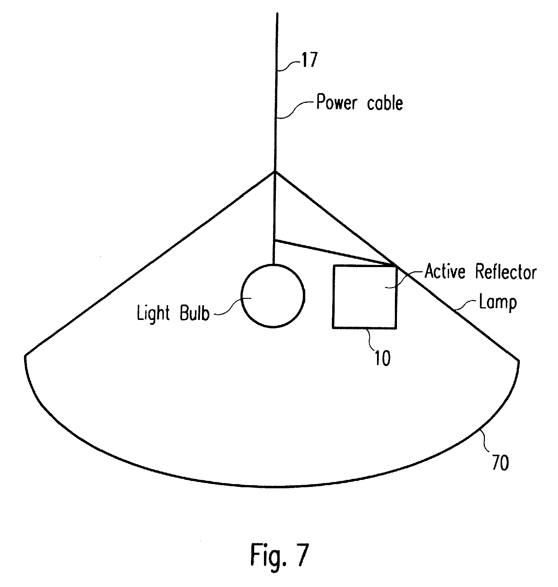

One of the advantages of the suggested solution is that no additional installation efforts are required. The active reflector can be connected to the always present power outlets (17) for the artificial lighting systems at the ceiling in offices or home environments. Due to the small physical dimensions of the device itself the repeater can easily be integrated into the usual objects used for the artificial lighting systems (70) in indoor environments as it is shown in Figure 7. Integration of the active reflector in the housing of the artificial lighting makes it invisible to the people working in the office and does not interfere with the preferences of the interior design.

To enhance the performance of the system, additional active reflectors may be placed apart from the first active reflector at the same height so that changes within the environment of the system e.g. rearranging of furniture or persons moving through the office will not cause the interruption of one of the data links.

**Claims**

1. An active reflector (10) for use in wireless data communication systems comprising transceiving means (30) for receiving signals from a first mobile terminal (13) and transmitting the received signals to a second mobile terminal (14) in an omni-directional way, so that a direct communication with high data rates between mobile terminals is enabled, whereby the active reflector is adapted to be mounted above the mobile terminals to ensure essentially a line of sight connection between the active reflector and each mobile terminal, and whereby said active reflector (10) comprises one common antenna (31) connected to the transceiving means (30).

2. An active reflector according to claim 1, comprising means (15) for processing received signals connected to said transceiving means (30).

3. An active reflector according to claim 2, comprising a local oscillator (32) connected to the processing means (15) for controlling a frequency division duplex.

4. An active reflector according to claim 2 or 3, wherein the signal processing means comprises at least one gain block (20).

5. An active reflector according to claim 4, wherein the gain block comprises more than one sub-gain block (21), whereby at least one of the sub-gain blocks can be switched off.

6. An active reflector according to one of the claims 2 to 5, comprising signal filtering means (22) for filtering the received signals or the received and amplified signals.

7. An active reflector according to one of the claims 2 to 6, wherein the means for signal processing comprises frequency translating means (60) for changing the received signal frequency to another frequency, and transmitting the signal at the changed frequency to the mobile terminals.

8. An active reflector according to one of the claims 1 to 7, whereby the active reflector (10) does not comprise a baseband processing and does not influence the logical set-up of the wireless data communication system,

9. An active reflector according to one of the claims 1 to 8, comprising means (61) for communicating data with at least one further active reflector.

10. An active reflector according to claim 9, wherein said means (61) are adapted to communicate with at least one further reflector via a pencil type link.

11. An active reflector according to one of the claims 1 to 10, wherein the active reflector is adapted to be power supplied by a power outlet (17) for an indoor lamp.

12. An active reflector according to one of the claims 1 to 11, wherein the active reflector is adapted to be integrated into a lamp (70).

13. A wireless data communication system for direct communication between mobile terminals in an indoor environment comprising at least one active reflector (10) according to one of the claims 1 to 12, and at least two mobile terminals (13, 14) with transceivers for direct wireless communication through the active reflector.

14. A wireless direct data communication system according to claim 13, comprising at least one further active reflector.

15. A wireless direct data communication system according to claim 13 or 14, comprising at least two active reflectors comprising means according to claim 9 for communicating signals from and to a first active reflector to and from a second active reflector.

Connection to power supply
(preferably normal current supply for
artificial light

17

Ceiling

Active Reflector

10

11

12

Sector
Coverage

$h_2$

Communication
Distance (D)

18

18

18

18

Optional
In/Output
Fixed
Backbone

19

Universal
Home
Switch(UHS)

High Data
Rate
Terminal

13

High Data
Rate
Terminal

14

$h_1$

Terminal
Antennae

R

Fig. 1

EP 1 830 488 A1

Fig. 2

EP 1 830 488 A1

Fig. 3

Fig. 4

Fig. 5

Fig. 6

17

Power cable

Active Reflector

Lamp

Light Bulb

10

70

Fig. 7

**European Patent Office**

**EUROPEAN SEARCH REPORT**

Application Number

EP 07 11 0884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 89/06459 A (NCR CO) 13 July 1989 (1989-07-13) * abstract * * page 2, line 1 - page 3, line 24 * * page 5, line 30 - page 6, line 1 * * page 10, lines 15-26 * * figure 1 * * claims 1,4 * | 1-7,9-15 | INV. H04B7/15 H01Q3/46 |
| Y | US 5 424 859 A (UEHARA KAZUHIRO [JP] ET AL) 13 June 1995 (1995-06-13) * column 14, line 39 - column 15, line 7 * | 1-7,9-15 | |
| A | GB 679 154 A (BRITISH COMM CORP LTD; TADEUSZ STEFAN HEFTMAN) 10 September 1952 (1952-09-10) * abstract * * page 2, left-hand column, line 60 - right-hand column, line 106 * * figure 1 * | 1-15 | |
| A | GB 2 128 851 A (JASCO INTERNATIONAL) 2 May 1984 (1984-05-02) * abstract * * page 1, left-hand column, line 29 - right-hand column, line 117 * * figure 1 * | 1-15 | TECHNICAL FIELDS SEARCHED (IPC) H04B H01Q |
| A | US 3 781 684 A (INSLERMAN H) 25 December 1973 (1973-12-25) * abstract * * column 1, line 38 - column 2, line 11 * * column 2, lines 47-62 * * figures * | 1-15 | |

-/--

The present search report has been drawn up for all claims

| Place of search | Date of completion of the search | Examiner |
|---|---|---|
| The Hague | 31 July 2007 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 11 0884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 506 457 A (VICTOR COMPANY OF JAPAN ;NTT DATA TSUSHIN KK (JP)) 30 September 1992 (1992-09-30) * abstract * * column 1, line 1 - column 3, line 6 * * figure 1 * * claims * | 1-15 | |
| A | JP 61 046632 A (NEC CORP) 6 March 1986 (1986-03-06) * abstract * * figures 1-4 * | 1-15 | |
| A | EP 0 302 455 A (ORION INDUSTRIES) 8 February 1989 (1989-02-08) * abstract * | 1-15 | |
| A | EP 0 920 074 A (SONY INTERNATIONAL EUROP GMBH) 2 June 1999 (1999-06-02) * abstract * * page 2, line 1 - page 4, line 34 * * page 5, lines 1-11 * * figure 1 * | 1-15 | TECHNICAL FIELDS SEARCHED (IPC) |
| A | JP 08 223172 A (MITSUBISHI ELECTRIC CORP) 30 August 1996 (1996-08-30) * abstract * * figures * | 1-15 | |
| A | US 5 509 028 A (MARQUE-PUCHEU GERARD) 16 April 1996 (1996-04-16) * the whole document * | 1-15 | |
| A | EP 0 515 728 A (KNAPP GUENTER) 2 December 1992 (1992-12-02) * the whole document * | 1-15 | |

-/--

The present search report has been drawn up for all claims

| Place of search | Date of completion of the search | Examiner |
|---|---|---|
| The Hague | 31 July 2007 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 830 488 A1

**European Patent Office**

**EUROPEAN SEARCH REPORT**

Application Number

EP 07 11 0884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 60 117833 A (MATSUSHITA DENKI SANGYO KK) 25 June 1985 (1985-06-25)<br>* abstract *<br>* figures *<br>----- | 1-15 | |

TECHNICAL FIELDS
SEARCHED (IPC)

The present search report has been drawn up for all claims

| Place of search | Date of completion of the search | Examiner |
|---|---|---|
| The Hague | 31 July 2007 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 07 11 0884

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2007

| Patent document cited in search report | | Publication date | Patent family member(s) | | Publication date |
|---|---|---|---|---|---|
| WO 8906459 | A | 13-07-1989 | DE<br>EP | 3883381 T2<br>0346438 A1 | 14-04-1994<br>20-12-1989 |
| US 5424859 | A | 13-06-1995 | NONE | | |
| GB 679154 | A | 10-09-1952 | NONE | | |
| GB 2128851 | A | 02-05-1984 | NONE | | |
| US 3781684 | A | 25-12-1973 | NONE | | |
| EP 0506457 | A | 30-09-1992 | DE<br>DE<br>JP<br>JP<br>US | 69216454 D1<br>69216454 T2<br>2848981 B2<br>4299628 A<br>5289306 A | 20-02-1997<br>15-05-1997<br>20-01-1999<br>22-10-1992<br>22-02-1994 |
| JP 61046632 | A | 06-03-1986 | NONE | | |
| EP 0302455 | A | 08-02-1989 | DE<br>DE<br>ES<br>FI<br>HK<br>JP<br>JP<br>US<br>US | 3885369 D1<br>3885369 T2<br>2047510 T3<br>883617 A<br>1004310 A1<br>1051730 A<br>2919839 B2<br>4941200 A<br>5093923 A | 09-12-1993<br>24-03-1994<br>01-03-1994<br>04-02-1989<br>20-11-1998<br>28-02-1989<br>19-07-1999<br>10-07-1990<br>03-03-1992 |
| EP 0920074 | A | 02-06-1999 | JP<br>US | 11243314 A<br>6339406 B1 | 07-09-1999<br>15-01-2002 |
| JP 08223172 | A | 30-08-1996 | NONE | | |
| US 5509028 | A | 16-04-1996 | AT<br>AU<br>AU<br>CA<br>DE<br>DE<br>EP<br>FI<br>FR<br>JP | 179559 T<br>671712 B2<br>5904794 A<br>2118633 A1<br>69418087 D1<br>69418087 T2<br>0617524 A1<br>941366 A<br>2703199 A1<br>7111485 A | 15-05-1999<br>05-09-1996<br>29-09-1994<br>27-09-1994<br>02-06-1999<br>25-11-1999<br>28-09-1994<br>27-09-1994<br>30-09-1994<br>25-04-1995 |
| EP 0515728 | A | 02-12-1992 | US | 5218356 A | 08-06-1993 |

For more details about this annex : see Official Journal of the European Patent Office, No. 12/82

## ANNEX TO THE EUROPEAN SEARCH REPORT
## ON EUROPEAN PATENT APPLICATION NO.

EP 07 11 0884

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2007

| Patent document cited in search report | Publication date | Patent family member(s) | Publication date |
|---|---|---|---|
| JP 60117833 A | 25-06-1985 | NONE | |

EPO FORM P0459

**EP 1 830 488 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5603080 A
- US 5812933 A
- US 5890055 A
- EP 0833403 A2